(19) Europäisches Patentamt
European Patent Office
Office européen des brevets

(11) **EP 3 745 323 A1**

(12) **EUROPEAN PATENT APPLICATION**

(43) Date of publication:
**02.12.2020 Bulletin 2020/49**

(51) Int Cl.:
**G06N 20/00** $^{(2019.01)}$    **G06N 7/00** $^{(2006.01)}$

(21) Application number: **19177449.6**

(22) Date of filing: **29.05.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Prowler.io Limited**
**Cambridge, Cambridgeshire CB2 1LA (GB)**

(72) Inventors:
• **Petangoda, Janith**
  **Cambridge, CB2 1LA (GB)**

• **Pascual-Diaz, Sergio**
  **Cambridge, CB2 1LA (GB)**
• **Adam, Vincent**
  **Cambridge, CB2 1LA (GB)**
• **Vrancx, Peter**
  **Cambridge, CB2 1LA (GB)**
• **Grau-Moya, Jordi**
  **Cambridge, CB2 1LA (GB)**

(74) Representative: **EIP**
**EIP Europe LLP**
**Fairfax House**
**15 Fulwood Place**
**London WC1V 6HU (GB)**

(54) **MULTI-TASK REINFORCEMENT LEARNING METHOD**

(57)     A computer-implemented method of determining a policy for an agent performing a task belonging to a given task class. For each task in the task class, the determined policy is arranged to select an action for the agent on the basis of an observation of a state of the respective system and in dependence on a set of general policy parameters, a latent dynamics variable, and a latent reward variable. The method includes initialising the set of general policy parameters and initialising, for each of a plurality of tasks in the class, a respective first variational distribution over latent dynamics variables and a respective second variational distribution over latent reward variables. The method further includes iteratively receiving, for each of the plurality of tasks, experience data for one or more state transitions, and updating the general policy parameters, each respective first variational distribution, and each respective second variational distribution, on the basis of the received experience data.

Fig. 4

**Description**

Technical Field

The present invention relates to a method of training a computer-implemented agent to perform tasks belonging to a given class.

Background

Reinforcement learning involves a computer system learning how to perform tasks by analysing data corresponding to previously-experienced instances of the same or similar tasks. Multi-task reinforcement learning (MTRL) has been proposed as a means of increasing the efficiency of reinforcement learning in cases where data is analysed from several different tasks of the same class, by enabling knowledge transfer between the different tasks.

Generally, the tasks in a given class differ either by having different system dynamics and/or by having different goal contexts. In order to learn how to perform tasks across a range of system dynamics and a range of goal contexts, using existing MTRL methods it is generally necessary to access training tasks that span the entire space of dynamics and goal contexts. This is because policies learned using existing MTRL methods are often not capable of generalising to unseen tasks where either the system dynamics or the goal context are changed independently from those of the training tasks.

Summary

According to a first aspect of the present invention, there is provided a computer-implemented method of determining a policy for an agent performing a task belonging to a given task class, each task in the task class being associated with a respective system. The respective systems belong to a system class and are differentiated by respective sets of dynamics parameters, and the tasks in the task class are further differentiated by respective sets of reward parameters for determining rewards dependent on actions performed by an agent. For each task in the task class, the determined policy is arranged to select an action for the agent on the basis of an observation of a state of the respective system and in dependence on a set of general policy parameters, a latent dynamics variable, and a latent reward variable. The method includes initialising the set of general policy parameters and initialising, for each of a plurality of tasks in the class, a respective first variational distribution over latent dynamics variables and a respective second variational distribution over latent reward variables. The method further includes iteratively receiving, for each of the plurality of tasks, experience data for one or more state transitions, and updating the general policy parameters, each respective first variational distribution, and each respective second variational distribution, on the basis of the received experience data, to increase an objective function for estimating an expected state value for states encountered by the agent while performing a task in the given task class. Each state transition includes: an initial observation of a state of the respective system; an action performed by the agent in accordance with the policy on the basis of the initial observation and in dependence on the set of general policy parameters, a latent dynamics variable sampled from the respective first variational distribution, and a latent reward variable sampled from the respective second variational distribution; an observation of a state of the respective system after the performance of the action by the agent; and a reward determined in accordance with the respective reward parameters and dependent on the state of the respective system after the performance of the action.

Introducing independent latent dynamics variables and latent reward variables as described above allows an agent can deal with different goal contexts (corresponding to different reward parameters) within a system with fixed dynamics parameters, or to work towards a given goal even when the dynamics parameters change. This disentangling of system dynamics and goal contexts allows an agent to generalise to a far greater range of unseen tasks than is possible for known MTRL methods, and in turn results in more efficient learning as it is only necessary for the training tasks to span the spaces of dynamics parameters and reward parameters independently, as opposed to having to span a higher-dimensional task space in which the dynamics parameters and the reward parameters are not separated.

Further features and advantages of the invention will become apparent from the following description of preferred embodiments of the invention, given by way of example only, which is made with reference to the accompanying drawings.

Brief Description of the Drawings

Figure 1 shows examples of tasks in the cart-pole task class.
Figure 2 shows examples of tasks in the reacher task class.

Figure 3 is a flow diagram representing a method for an agent to perform a task in accordance with an embodiment of the present invention.

Figure 4 is a schematic block diagram showing multiple agents interacting with respective systems and with a learner.

Figure 5 is a flow diagram representing a method for a learner to determine a policy in accordance with an embodiment of the present invention.

Figure 6 is a flow diagram representing a method for a learner to update a set of parameters in accordance with an embodiment of the present invention.

Figures 7a and 7b respectively show examples of probability distributions over latent dynamics variables and latent reward variables.

Figure 8 shows results of a simulated experiment in which agents perform tasks in the cart-pole task class.

Figure 9 shows an example of an augmented cart-pole task.

Figure 10 shows an augmented reacher task.

Figure 11 is a schematic block diagram showing a meta-agent observing a system and generating control data for an agent interacting with the system.

Figure 12 is a flow diagram representing a method for a meta-agent to determine meta-actions in accordance with an embodiment of the present invention.

Figure 13 is a flow diagram representing a method for a meta-policy learner to determine a meta-policy in accordance with an embodiment of the present invention.

Figures 14a and 14b show results of simulated experiments in which a meta-agent performs augmented cart-pole tasks.

## Detailed Description

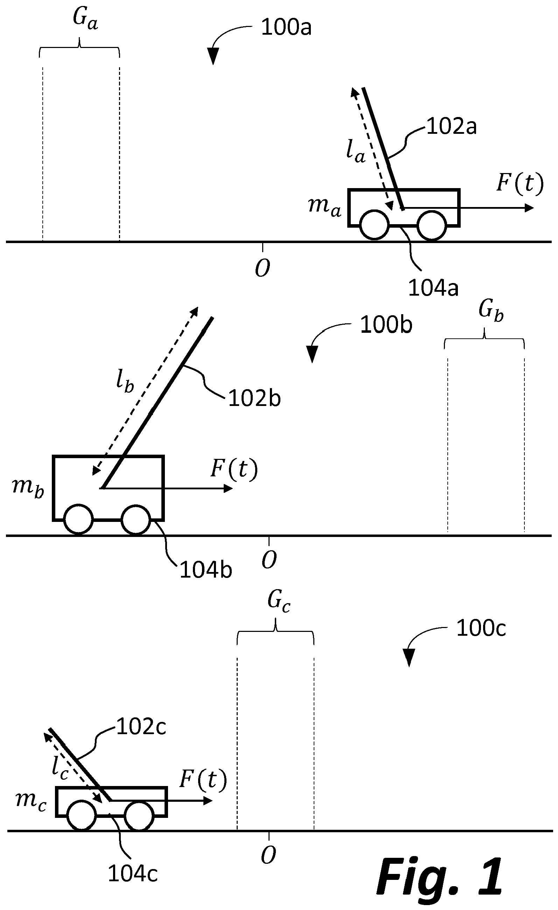

Figure 1 shows an example of three tasks 100a, 100b, and 100c belonging to the same task class (the cart-pole class). Each of the tasks is associated with a respective dynamical system including a uniform rigid pole 102 connected at one end by a hinge to a cart 104, where the length $l$ of the pole and the mass $m$ of the cart are dynamics parameters that vary between the tasks 100a,b,c. The horizontal position and speed of the cart 104 with respect to a fixed origin are given by $x$ and $\dot{x}$ respectively, and the angular position and velocity of the pole 102 with respect to the vertical are given by $\phi$ and $\dot{\phi}$ respectively. The state of each of the dynamical systems at a given time can be represented by a four-dimensional state vector $s = (x, \phi, \dot{x}, \dot{\phi})^\mathsf{T}$. For each of the tasks 100, a computer-implemented agent applies a time-varying horizontal force $F(t)$ to the cart 104. Given a random stationary starting state $s_0 = (x_0, \phi_0, 0, 0)$, the objective of the agent is to vary the time-varying force $F(t)$ to cause the pole 102 to stand vertically such that the cart and the free end of the pole are both within a predetermined goal region. The central positions of the goal regions $G_a, G_b, G_c$ shown in Figure 1 are reward parameters that vary between the tasks 100a,b,c. In order to perform the task, the agent performs an action at each of a set of discrete time steps which may, for example, be equally temporally-separated. Each action corresponds to a force being applied to the cart 104 for a fixed duration of time (for example, the duration of one time step). At each time step, a reward $r$ is determined in accordance with the reward parameters of the task. In the present example, a positive reward is determined for time steps at which the cart 104 and the free end of the pole 102 are both within the specified goal region $G$ for the given task. A terminal event occurs if the angle $\phi$ exceeds a predetermined value, corresponding to the pole falling down.

In the present example, a multi-task reinforcement learning (MTRL) problem is posed in which the objective of a computer-implemented learner is to determine a policy for selecting actions of an agent performing tasks belonging to the cart-pole class described above. As described above, tasks in the cart-pole class are each characterised by a respective set of dynamics parameters and a respective set of reward parameters. The respective dynamics parameters determine the dynamics of the respective system, i.e. how the system transitions from one state to the next. The respective reward parameters do not affect the dynamics of the respective system, but are used to determine rewards dependent on observations of states of the associated system. Tasks in the cart-pole class are thus labelled according to a dynamics index i and a reward index $j$.

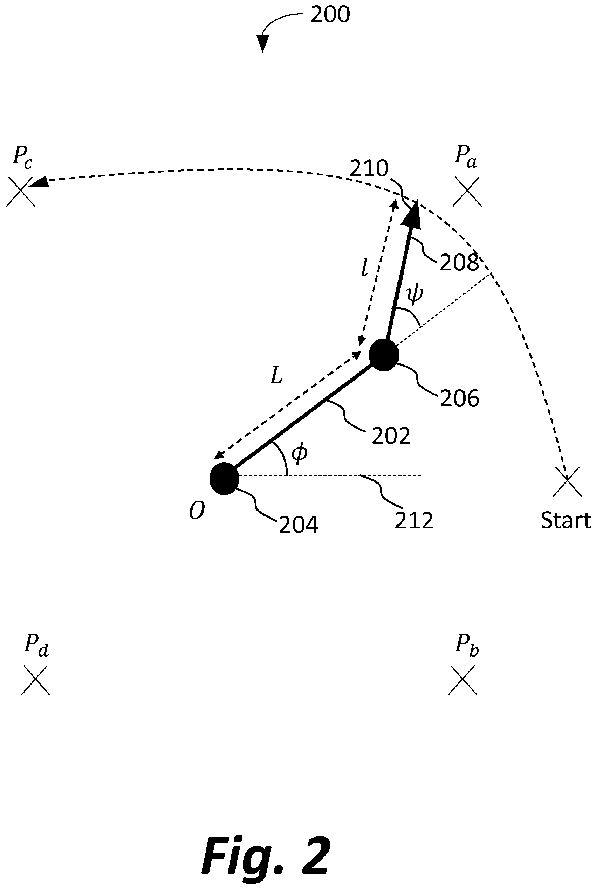

Figure 2 shows an example of a class of tasks 200 referred to as the reacher class. Each task in the class is associated with a dynamical system including a robot arm comprised of a first rigid rod segment 202 of length $L$ attached at one end by a first hinge 204 to a fixed point $O$ and attached at the other end by a second hinge 206 to a second rigid rod segment 208 of length $l$. The second rigid rod 208 has a free end with a pointer 210. The lengths $L, l$ of the segments are dynamics parameters that vary between tasks in the class. The state of the reacher system can be represented at any given time by a four-dimensional state vector $s = (\phi, \psi, \dot{\phi}, \dot{\psi})^\mathsf{T}$, where $\phi$ is the angle between the first segment 202 and a fixed plane 212, and $\psi$ is the angle between the second segment 208 and the first segment 202. For each of the tasks 200, a computer-implemented agent applies time-varying torques $T_1(t)$ and $T_2(t)$ at each of the hinges 204 and 206. Given a random stationary starting state $s_0 = (\phi_0, \psi_0, 0, 0)$, the objective of the agent is to vary the time-varying torques $T_1(t)$ and $T_2(t)$ to cause the pointer 210 to reach a predetermined goal point. The locations of the goal points

$P_a$, $P_b$, $P_c$, $P_d$ shown in Figure 2 are reward parameters that vary between the tasks 200. The dashed curve shows an example of a path followed by the pointer 210 moving from a predetermined starting point to the goal point $P_c$. In order to perform the task, the agent performs an action at each of a set of discrete time steps. Each action corresponds to a torque being applied at each of the hinges 204 and 206 for a fixed duration of time (for example, the duration of one time step). At each time step, a reward $r$ is determined in accordance with the reward parameters of the task. In the present example, a negative reward is determined in dependence on the distance between the pointer 210 and the goal point (for example, proportional to the distance between the pointer and the goal point).

In the example of Figure 2, an MTRL problem is posed in which the objective of a computer-implemented learner is to determine a policy for selecting actions of an agent performing tasks belonging to the reacher class described above. Tasks in the reacher class are each characterised by a respective set of dynamics parameters and a respective set of reward parameters, and are labelled according to a dynamics index $i$ and a reward index $j$.

In order to perform tasks belonging to a given class, in accordance with the present invention, an agent is provided with a policy $\pi$ for selecting actions on the basis of an observation $s$ of a state of a system, a set of general policy parameters $\theta$, a latent dynamics variable $z$ and a latent reward variable $g$. Specifically, the agent is arranged to select actions according to Equation (1):

$$a \sim \pi_\theta(a|s,z,g). \qquad (1)$$

In other words, given an observation $s$ of a state of the system, a latent dynamics variable $z$ and a latent reward variable $g$, the agent samples an action $a$ from a distribution $\pi$ parameterised by a set of general policy parameters $\theta$. In some examples, the policy may be deterministic such that given a set of conditions $\{s, g, z\}$, the agent will always select the same action. In other examples, the policy may be stochastic, meaning that a set of conditions $\{s,g,z\}$ will result in a distribution over possible actions. The policy may be implemented by any means known in the art, for example as a neural network in which $\theta$ encodes connection weights and/or bias parameters. An output of the neural network may be used to determine probabilities of particular actions being selected.

In some examples, an observation s of a state of a system encodes a complete description of the state of the system. In such a case, the system is said to be fully observable by the agent. In other examples, a system may be only partially observable by the agent, in which case an observation s does not encode a complete description of the state of the system. This is likely to be the case, for example, for a physical system in which observations are made using one or more sensors. The present invention is applicable both in the case of fully observable and partially observable systems.

The latent dynamics variable $z$ and the latent reward variable $g$ encode information relating to the specific task being performed by the agent. Each may each be chosen to have any number of dimensions, for example one dimension, two dimensions, three dimensions or more. In accordance with the present invention, information about the dynamics of a specific task are embedded as $z$ in a latent dynamics space, and information about the rewards for a specific task are embedded as $g$ in a latent reward space. As will be explained in more detail hereafter, an objective of the learner is to learn a probability distribution over latent dynamics variables $z$, given a dynamics index $i$ corresponding to a given set of dynamics parameters. Similarly, an objective is to learn a probability distribution over latent reward variables $g$, given a reward index $j$ corresponding to a given set of reward parameters.

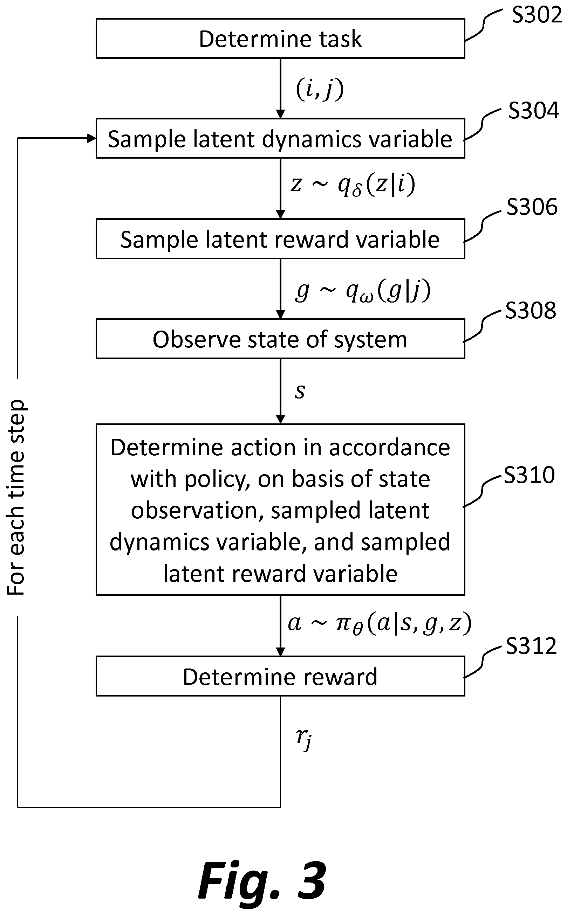

Figure 3 shows an example of a method performed by an agent in accordance with the present invention. The agent determines, at S302, a task belonging to a given task class. The determined task is specified by a dynamics index $i$ and a reward index $j$. In some examples, the agent may receive data from a learner indicating a set of dynamics parameters and a set of reward parameters, or indicating the indices $(i,j)$ corresponding to a specific task. In other examples, the dynamics parameters and/or the reward parameters may be predetermined. The dynamics index $i$ may be predetermined, for example, because the agent interacts with a physical system with predetermined physical properties. A given dynamics index $i$ corresponds to a given set of dynamics parameters, which affect how the states of a system transition, for example as a result of actions performed by an agent interacting with the system. A given reward index $j$ corresponds to a given set of reward parameters, which do not affect how the states of a system transition, but do affect how rewards are determined for the agent.

For a given time step, the agent samples, at S304, a latent dynamics variable $z$ from a probability distribution $q_\delta(z|i)$ conditioned on the dynamics index $i$ and parameterised by a set of dynamics embedding parameters $\delta$. In some examples, the probability distribution $q_\delta(z|i)$ for a given dynamics index $i$ is a multivariate Gaussian distribution and the dynamics embedding parameters $\delta$ include a mean vector and a covariance matrix of the multivariate Gaussian distribution. In some examples, the covariance matrix is restricted to being diagonal. In other examples, the covariance matrix is unrestricted. In examples where the dynamics variable $z$ is one-dimensional, the multivariate Gaussian distribution reduces to a one-dimensional Gaussian distribution. Any other suitable type of probability distribution may be used. An advantage of using a multivariate Gaussian distribution is that certain computations can then be performed analytically, as will be described in more detail hereafter, reducing the computational cost of determining a policy in accordance with the present invention.

The agent samples, at S306, a latent reward variable $q$ from a probability distribution $q_\omega(g|j)$ conditioned on the reward index $j$ and parameterised by a set of reward embedding parameters $\omega$. Similarly to the distribution over latent dynamics variables discussed above, the probability distribution $q_\omega(g|j)$ for a given $j$ may be a multivariate Gaussian distribution or any other suitable probability distribution.

The agent observes, at S308, a state of the system. As mentioned above, an observation $s$ may encode a full description, or a partial description, of the state of the system.

The agent determines, at S310, an action $a$ in accordance with the policy $\pi_\theta(a|s,z,g)$, on the basis of the observation s of the state of the system, the sampled dynamics variable $z$, and the sampled reward variable $g$. As explained above, in the case of a stochastic policy, determining the action $a$ involves sampling an action from a conditional distribution such that $a \sim \pi_\theta(a|s, z, g)$. More precisely, the observed/sampled variables $s$, $z$, $g$ are input to a neural network or other suitable model, and the model determines how the variables are combined to generate the output distribution $\pi_\theta(a|s, z, g)$, from which the action $a$ is sampled.

After performing the determined action $a$, the agent determines, at S312, a reward $r_j$ in accordance with the determined reward parameters associated with the task. The reward $r_j$ generally depends on the state of the system after the performance of the action by the agent. In some examples, the agent may be able to determine the reward deterministically from the state observation $s$ and the action $a$. In other examples, the agent may be unable to determine the reward until the following state observation is made.

The agent performs S304-S312 for each time step in an episode. Depending on the class of task, the episode may have a predetermined number of time steps, may be terminated by a terminal event, or may continue for an indefinite number of time steps.

By performing the method of Figure 3, the agent generates experience data indicating a series of state transitions. Each state transition includes an initial state observation, an action, a final state observation, and a reward.

As discussed above, in accordance with the present invention an agent selects actions in accordance with a policy, on the basis of an observation of a state of a system, a set of general policy parameters, a latent dynamics variable, and a latent reward variable. In the example of Figure 3, the latent dynamics variable and the latent reward variable are sampled from respective conditional distributions $q_\delta(z|i)$ and $q_\omega(g|j)$. In some examples, the conditional distributions are parameterised such that $q_\delta(z|i) = q_{\delta_i}(z)$ and $q_\omega(g|j) = q_{\omega_j}(g)$, where $\delta = \{\delta_i\}_{i=1}^I$ and $\omega = \{\omega_j\}_{j=1}^J$, with $I$ and $J$ being the number of dynamics indices and the number of reward indices respectively corresponding to the set of training task. Using this parameterisation, each task indexed $(i,j)$ is associated with a specific set of embedding parameters $\{\delta_i, \omega_j\}$. This means that an agent performing the method of Figure 3 in respect of a specific task is only required to access embedding parameters relating to that specific task, as opposed to a global set of embedding parameters $\{\delta, \omega\}$ relating to all tasks in the class. In such examples, the full set of parameters required by an agent to perform the routine of Figure 3 is $\{\theta, \delta_i, \omega_j\}$, where only the general policy parameters $\theta$ are shared between agents performing different tasks. In accordance with the present invention, these parameters are determined by a computer-implemented learner, as will be described in more detail hereafter.

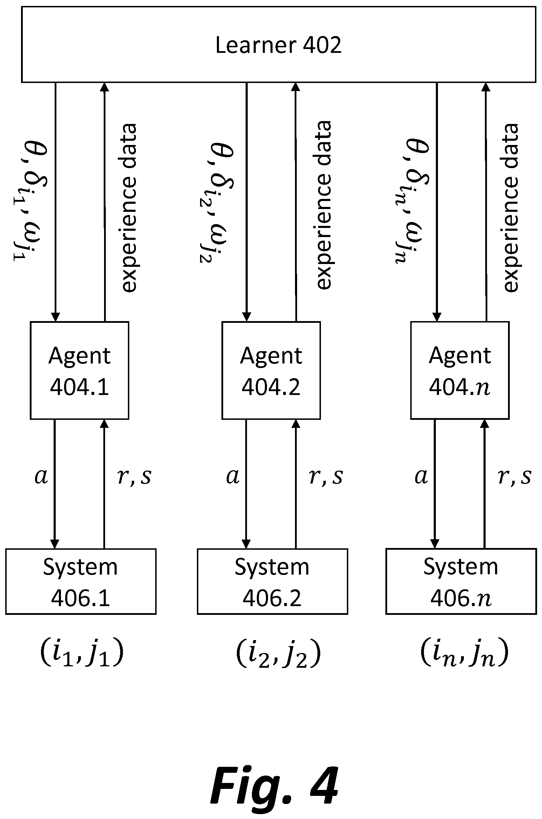

Figure 4 shows an example of a computer-implemented learner 402 in communication with $n$ agents 404.1, 404.2, ..., 404.$n$ (collectively referred to as agents 404, of which three are shown). Each of the agents 404 performs a respective task indexed with a dynamics index $i$ and a reward index $j$, corresponding to a set of dynamics parameters and a set of reward parameters respectively. Each of the agents 404 makes observations of a respective system 406, and performs actions according to a policy $\pi_\theta(a|s,z,g)$ on the basis of the state observations and sampled values of the latent dynamics variable z and the latent reward variable $g$, as described above with reference to Figure 3. Each of the agents 404 thereby generates experience data indicating state transitions as described above. The agents 404 send the experience data to the learner 402. In one configuration, the agents 404 stream the experience data to the learner 402 as the experience data is generated. In another configuration, the agents 404 send the experience data to the learner 402 in batches, for example after the agent has completed a predetermined number of episodes.

The learner 402 processes the experience data received from the agents 404, and generates updated general policy parameters $\theta$, as well as updated embedding parameters $\delta, \omega$ for the conditional distributions $q_\delta(z|i)$ and $q_\delta(g|j)$. In the present example, the learner 402 uses the parameterisation discussed above in which $q_\delta(z|i) = q_\delta(z)$ and $q_\omega(g|j) = q_{\omega_j}(g)$, and therefore generates separate sets of embedding parameters $\delta_i, \omega_j$ for each of the agents 404. The learner 402 sends the updated parameters $\theta, \delta_i, \omega_j$ to the agents 404, and the agents 404 continue to perform the respective tasks using the updated parameters.

In the example of Figure 4, the systems 406 are physical systems. The agents 404 make state observations using one or more sensors and perform actions by generating control signals for one or more actuators. In other examples, agents may interact with simulated systems. In some cases, a learner and multiple agents may be implemented within a single computing device or computing system, with the learner and each agent having a respective dedicated memory region.

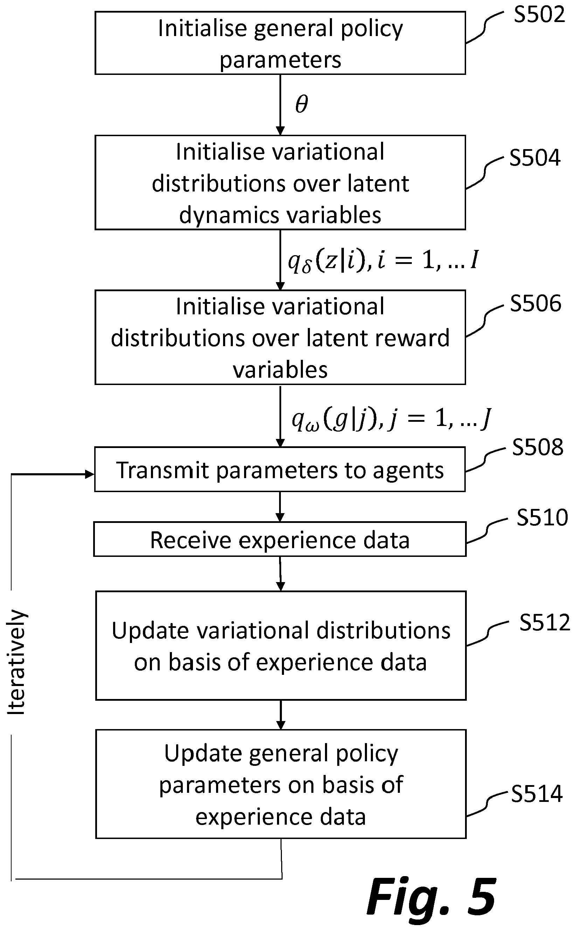

Figure 5 shows an example of a method performed by a computer-implemented learner in accordance with the present invention. The learner is in communication with multiple agents performing a set of tasks belonging to a given class, as shown for example in Figure 4. The learner initialises, at S502, a set of general policy parameters $\theta$. The general policy parameters $\theta$ may be initialised randomly, for example, or in accordance with some prior knowledge a policy. In some examples, a policy is implemented using a neural network, in which case the general policy parameters $\theta$ includes connection weights, bias values, and/or other parameters of the network. Other policy implementations will be known to those skilled in the art.

The learner initialises, at S504, variational distributions $q_\delta(z|i)$ over latent dynamics variables $z$ for each the tasks being performed by the agents. Initialising the variational distributions involves initialising the dynamics embedding parameters $\delta$. In some examples, the learner initialises a respective set $\delta_i$ of dynamics embedding parameters for each dynamics index, corresponding to a respective set of dynamics embedding parameters for each set of dynamics parameters.

The learner initialises, at S506, variational distributions $q_\omega(g|j)$ over latent reward variables $g$ for each of the tasks being performed by the agents. Initialising the variational distributions involves initialising the reward embedding parameters $\omega$. In some examples, the learner initialises a respective set $\omega_j$ of reward embedding parameters for each reward index, corresponding to a respective set of reward embedding parameters for each set of reward parameters.

The learner transmits, at S508, the generalised policy parameters $\theta$ and the embedding parameters $\delta, \omega$ to the agents, and the agents perform the respective tasks using the transmitted parameters, as described above with reference to Figure 3.

The learner receives, at S510, experience data from the agents, the experience data indicating state transitions as described above. The learner then uses the experience data to update, at S512, each of the variational distributions $q_\delta(z|i)$ over latent dynamics variables and each of the variational distributions $q_\omega(g|j)$ over latent reward variables. In other words, the learner updates the embedding parameters $\delta, \omega$ on the basis of the experience data. Finally, the learner updates, at S514, the general policy parameters $\theta$ on the basis of the experience data. The learner iteratively performs S508-S510, to iteratively increase an objective function for estimating an expected state value for states encountered by an agent performing a task in the given task class.

In the present example, a task-specific state value function for a given task with dynamics index $i$ and reward index $j$ is given by Equation (2):

$$V_{i,j}^\pi(s) = \mathbb{E}\left[\sum_{t=0}^{T} \gamma^t \left( r(s_{t+1}) - \frac{1}{\alpha_d}\log\frac{q_\delta(z_t|i)}{p(z_t|i)} - \frac{1}{\alpha_r}\log\frac{q_\omega(g_t|j)}{p(g_t|j)} \right.\right.$$
$$\left.\left. - \frac{1}{\alpha_\pi}\log\frac{\pi_\theta(a_t|s_t,z_t,g_t)}{p(a_t|s_t,z_t,g_t)} \right)\right], \qquad (2)$$

where $s_0 = s$. The expectation in Equation (2) is taken over trajectories in which $a_t \sim \pi_\theta(a_t|s_t,z_t,g_t)$, $z_t \sim q_\delta(z_t|i)$, $g_t \sim q_\omega(g_t|j)$. The constant $\gamma \in (0,1]$ is a discount factor that results in sooner rewards contributing more than distant rewards. For episodic tasks in which the number $T$ of time steps is finite (either being predetermined or being terminated by a terminal event), the discount factor may be equal to unity. For infinite horizon tasks in which $T \to \infty$, the discount factor must be between zero and one to ensure convergence of the sum in Equation (2) (assuming the rewards r are bounded).

The distributions $p(z_t|i)$ and $p(g_t|j)$ are prior distributions over latent dynamics variables and latent reward variables respectively. The prior distributions may be chosen to include information that is known about the tasks, but such information is not necessary. In a specific example, the prior distributions $p(z_t|i)$ and $p(g_t|i)$ are multivariate normal distributions with zero mean and identity covariance, though it will be appreciated that other prior distributions may be used.

The distribution $p(a_t|s_t,z_t,g_t)$ is a prior policy that has the effect of penalising the agent such that certain behaviour is encouraged or discouraged in the learned policy $\pi_\theta$. In a specific example, the prior policy $p(a_t|s_t,z_t,g_t)$ is an improper uniform policy, resulting in an entropy-regularising term that encourages exploration of the state space. In other examples, a prior policy may be chosen to cause the agent to mimic certain behaviour, for example observed behaviour of a human user manually performing the same task as the agent.

Each summand in the sum of Equation (2) includes a discounted penalised cumulative reward, where in this example the reward is penalised by three respective log terms. The constants $\alpha_d$, $\alpha_r$ and $\alpha_\pi$ weigh the respective log terms, and may be tuned for a specific MTRL problem, for example in dependence on the relative importance of exploring state spaces, dynamics spaces, and reward spaces.

The ultimate objective of the learner is to determine an optimal policy $\pi^*(a|s,z,g)$, along with optimal variational distributions $q_\delta^*(g|i)$ and $q_\omega^*(g|j)$, to maximise, for any given state observation $s$, a global state value function $V^\pi(s)$ given by Equation (3):

$$V^\pi(s) = \mathbb{E}_{i,j}\big[V_{i,j}^\pi(s)\big] = \sum_{j=1}^{J}\sum_{i=1}^{I} p(i)p(j)V_{i,j}^\pi(s), \qquad (3)$$

where $p(i)$ and $p(j)$ are probability distributions over the dynamics index $i$ and the reward index $j$, respectively. The global state value function measures the effectiveness of an agent at performing tasks across the given class, given that the agent selects actions in accordance with the policy $\pi(a|s,z,g)$ and uses the dynamics and reward embeddings encoded in the variational distributions $q_\delta(z|i)$, $q_\omega(g|j)$.

By performing the routine of Figure 5, the learner optimises an objective function for estimating the expected state value function of Equation (3) for states encountered by an agent performing a task in the given task class. The form of the objective function depends on the exact implementation of the method performed by the learner. In one example, the learner receives experience data in the form of complete trajectories, each trajectory having a starting state $s_0$ and containing a maximum of $T - 1$ state transitions. The number of state transitions may be less for trajectories in which a terminal event is encountered. The learner generates a Monte Carlo sample $\tilde{R}\big(\tau_m^{i,j}\big)$ consisting of a penalised cumulative reward for each received trajectory. Assuming uniform distributions over dynamics indices and reward indices, trajectories $\tau_m^{i,j}$ for $m = 1, \ldots, M$ are sampled for each $i = 1, \ldots, I$, $J = 1, \ldots, J$, and the resulting objective function is then given by Equation (4):

$$L(\theta, \delta, \omega) = \frac{1}{MIJ}\sum_{m,i,j=1}^{M,I,J} \tilde{R}\big(\tau_m^{i,j}\big) - \frac{C}{\alpha_d}\mathbb{E}_i\big[\mathrm{KL}(q_\delta(\cdot\,|i)\|p(\cdot\,|i))\big]$$
$$- \frac{C}{\alpha_r}\mathbb{E}_j\big[\mathrm{KL}\big(q_\omega(\cdot\,|j)\|p(\cdot\,|j)\big)\big], \qquad (4)$$

where KL denotes the Kullback-Leibler divergence between two probability distributions, and the constant $C = (1 - \gamma^{T-1})/(1 - \gamma)$. The penalised cumulative reward $\tilde{R}\big(\tau_m^{i,j}\big)$ is defined using Equation (5):

$$\tilde{R}\big(\tau_m^{i,j}\big) = \sum_{h=0}^{T-1}\gamma^h\left(r\big(s_{h+1,m}^{i,j}\big) - \frac{1}{\alpha_\pi}\log\frac{\pi_\theta\big(a_{h,m}^{i,j}|s_{h,m}^{i,j}, z_{h,m}^{i,j}, g_{h,m}^{i,j}\big)}{p\big(a_{h,m}^{i,j}|s_{h,m}^{i,j}, z_{h,m}^{i,j}, g_{h,m}^{i,j}\big)}\right), \qquad (5)$$

where the additional indices $i,j,m$ on the rewards, actions, state observations and latent variables indicate values encountered on the trajectory $\tau_m^{i,j}$. The general policy parameters $\theta$ and the embedding parameters $\delta, \omega$ are updated using gradient ascent to increase the objective function of Equation (4). Gradients of the objective function may be determined using standard gradient tools, and those skilled in the art will appreciate that the log-derivative trick may be used to determine the gradient with respect to the general policy parameters $\theta$. It is noted that, in the case that the variational distributions $q_\delta(z|i)$, $q_\omega(g|j)$, and the prior distributions $p(z|i)$, $p(g|j)$ are all multivariate Gaussian distributions, the KL terms in Equation (4) can be computed in closed form. In other examples, the KL terms may be approximated, for example using Monte Carlo sampling, using a mixture of Gaussians approximation, or using a variational approximation.

In the above example, it is assumed that the probability distributions over the dynamics indices and reward indices are uniform. In other cases, for example where certain tasks in the task class are more likely than others, the above exemplary method can be straightforwardly adapted to take into account the non-uniform distributions either by weighting the terms in Equation (4) accordingly or by sampling received trajectories randomly as opposed to including a fixed number from each task.

In some examples in which an objective function is based on Monte Carlo samples as described above, it is observed higher cumulative rewards are consistently determined for certain tasks than for other tasks. This can lead to some tasks having relatively little effect on the parameter updates, which can result in the learner determining a policy that performs better on the tasks with consistently higher cumulative rewards that on the tasks with consistently lower cumulative rewards. In order to overcome this problem, in some examples each of the Monte Carlo samples $\tilde{R}\left(\tau_m^{i,j}\right)$ is normalised to have a predetermined mean and a predetermined variance, for example a mean of zero and a variance of one. In such examples, each of the trajectories contributes equally to the gradient computation, resulting in a policy that properly optimises the performance of the policy over the entire task class.

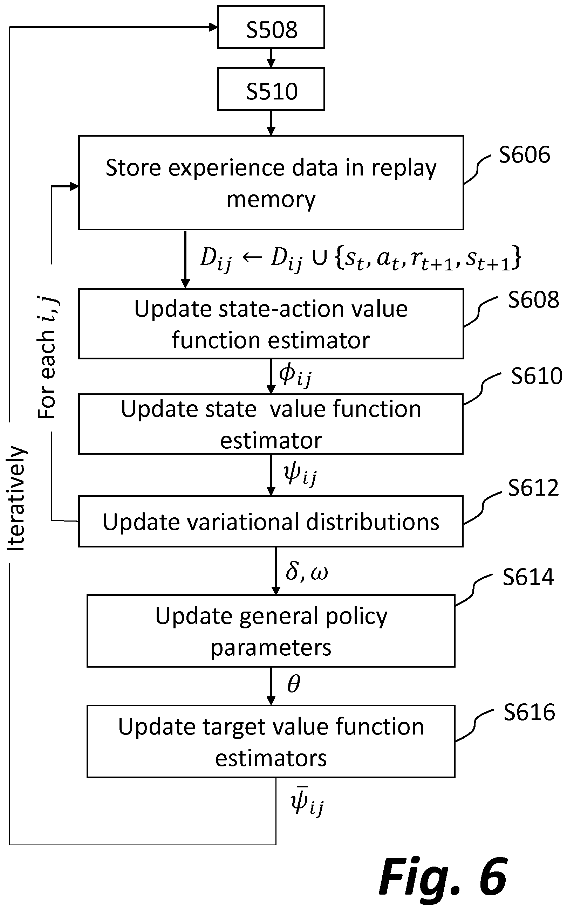

In the above example, an objective function estimator was determined using Monte Carlo samples corresponding to complete trajectories experienced by an agent. In other examples, objective functions may be determined on the basis of individual sampled transitions as opposed to complete trajectories. Determining objective functions on the basis of individual sampled transitions has the advantage of reducing detrimental effects on learning caused by correlations that generally appear between states encountered within trajectories. Figure 6 shows an example of a method for updating variational distributions $q_\delta(z|i)$ and $q_\omega(g|j)$ and general policy parameters $\theta$ on the basis of individual transitions sampled from a memory. Prior to performing the method of Figure 6, the learner initialises, along with the general policy parameters $\theta$ and the variational distributions $q_\delta(z|i)$ and $q_\omega(g|j)$, parameters $\psi_{ij}$ of a task-specific value function approximator $V_{\psi_{ij}}$ for each training task, for approximating the corresponding task-specific value function $V_{ij}^{\pi}$ of Equation (2). In the present example, each task-specific value function approximator is implemented using a neural network, and initialising the parameters of the task-specific value function approximator includes initialising connections weights and/or other parameters of the neural network, for example randomly. The learner also initialises, for each training task, parameters $\overline{\psi_{ij}}$ of a task-specific target value function estimator $V_{\overline{\psi_{ij}}}$, which in the present example is also implemented as a neural network. The parameters $\overline{\psi_{ij}}$ may be initialised to be equal to the parameters $\psi_{ij}$.

In addition to the task-specific value function estimator and the respective task-specific target value function estimator, the learner initialises parameters $\phi_{ij}$ of a task-specific state-action value function approximator $Q_{\phi_{ij}}$ for each training task, for approximating a corresponding task-specific state-action value function $Q_{ij}^{\pi}$ defined in Equation (6):

$$Q_{ij}^{\pi}(s, a) = \mathbb{E}_{s'}\left[r_j(s') + V_{ij}^{\pi}(s')\right], \qquad (6)$$

where the expectation is over possible states $s'$ following the state s as a result of an agent performing the action $a$.

The learner also initialises, for each training task, a corresponding replay memory $D_{ij}$ in which transitions will be stored and from which transitions will be sampled.

Figure 6 shows a method performed by a learner to update the embedding parameters $\delta$, $\omega$ and the general policy parameters $\theta$ the basis of transitions sampled from a memory. Having received experience data at S510 as described above, the learner stores, at S606, the experience data received for a given training task indexed $(i,j)$ in the corresponding replay memory $D_{ij}$. In this example, $M$ transitions are received for the training task, and these transitions are added to the respective replay memory according to Equation (7):

$$D_{ij} \leftarrow D_{ij} \cup \left\{s_{t,m}^{ij}, a_{t,m}^{ij}, r_{t+1,m}^{ij}, s_{t+1,m}^{ij}\right\}_{m=1}^{M}. \qquad (7)$$

Once the experience data is stored for the task $(i,j)$, the learner updates, at S608, the parameters $\phi_{ij}$ of the task-specific state-action value function estimator $Q_{\phi_{ij}}$ to reduce a loss $L_{Q_{i,j}}$ given by Equation (8):

$$L_{Q_{i,j}} = \mathbb{E}_{s,a \sim D_{ij}}\left[\hat{Q}_{ij}(s, a) - Q_{\phi_{ij}}(s, a)\right]^2, \qquad (8)$$

where the target $\hat{Q}_{ij}(s,a) = r_j(s') + \gamma V_{\overline{\psi_{ij}}}(s')$ is a one-sample estimate of the state-action value function of Equation (6), treating the target state value function estimator as the correct state value function. In order to reduce the loss, stochastic gradient descent is used, in which the expectation value appearing in Equation (8) is estimated either using a single sample or using a mini-batch of multiple samples.

The learner updates, at S610, the parameters $\psi_{ij}$ of the task-specific state value function estimator $V_{\psi_{ij}}$ to reduce a loss $L_{V_{ij}}$ given by Equation (9):

$$L_{V_{i,j}} = \mathbb{E}_{s,a \sim D_{ij}} \left[ \hat{V}_{ij}(s) - V_{\psi_{ij}}(s) \right]^2, \qquad (9)$$

where the target $\hat{V}_{ij}(s)$ is given by Equation (10):

$$\hat{V}_{ij}(s) = \mathbb{E}\left[ Q_{\phi_{ij}}(s,a) - \frac{1}{\alpha_d}\log\frac{q_\delta(z|i)}{p(z|i)} - \frac{1}{\alpha_r}\log\frac{q_\omega(g|j)}{p(g|j)} \right.$$
$$\left. - \frac{1}{\alpha_\pi}\log\frac{\pi_\theta(a|s,z,g)}{p(a|s,z,g)} \right], \qquad (10)$$

in which the expectation is over $z \sim q_\delta(z|i)$, $g \sim q_\omega(g|j)$, and $a \sim \pi_\theta(a|s, z,g)$. A one-sample estimate is used to evaluate $\hat{V}_{ij}(s)$, and stochastic gradient descent is used to reduce the loss. It is known that a state-action value function estimator may overestimate the state-action value function $Q_{ij}^\pi(s,a)$, which can have a detrimental effect on learning. To mitigate against overestimation of the state-action value function, in some examples the state-action value function estimator used in Equation (10) is a minimum of two or more candidate state-action value estimators $Q_{\phi_{ij}}^{(x)}(s,a)$ for $x = 1,2, ...,$ such that $Q_{\phi_{ij}}(s,a) \equiv \min_x Q_{\phi_{ij}}^{(x)}(s,a),$ where the state-action value estimators are trained simultaneously using the loss defined in Equation (8), but are initialised with different parameters.

The learner updates, at S612, the variational distributions $q_\delta(z|i)$ and $q_\omega(g|j)$, to minimise losses corresponding to estimated KL divergences between the variational distributions and corresponding theoretically optimal (but intractable) distributions $q_\delta^*(z|i), \ q_\omega^*(g|j)$. The resulting losses are given by Equations (11) and (12):

$$L_{q_i} = \mathbb{E}_{z \sim q_\delta(z|i)} \left[ \log\frac{q_\delta(z|i)}{p(z|i)} - \alpha_d \tilde{D}_i(z) \right], \qquad (11)$$

$$L_{q_j} = \mathbb{E}_{g \sim q_\omega(g|j)} \left[ \log\frac{q_\omega(g|j)}{p(g|j)} - \alpha_r \tilde{G}_j(g) \right], \qquad (12)$$

where:

$$\tilde{D}_i(z) = \mathbb{E}_j \underset{g \sim q_\omega(g|j)}{\mathbb{E}} \underset{a,s}{\mathbb{E}} \left[ Q_{\phi_{ij}}(s,a) - \frac{1}{\alpha_r}\log\frac{\pi_\theta(a|s,z,g)}{p(a|s,z,g)} \right], \qquad (13)$$

$$\tilde{G}_j(g) = \mathop{\mathbb{E}}_i \mathop{\mathbb{E}}_{z \sim q_\delta(z|i)} \mathop{\mathbb{E}}_{a,s} \left[ Q_{\phi_{ij}}(s,a) - \frac{1}{\alpha_r} \log \frac{\pi_\theta(a|s,z,g)}{p(a|s,z,g)} \right].$$
(14)

The quantities defined by Equations (13) and (14) are approximated by sampling as appropriate from the replay memories $D_{ij}$, and stochastic gradient descent is used to reduce the losses of Equations (11) and (12).

For each training task, the learner repeats S608-612 for a given number of gradient steps (for example one gradient step as shown in Figure 6, or alternatively two, three or more gradient steps), implicitly increasing an objective function for estimating the expected state value for states encountered by an agent performing a task in the given task class.

Having updated the variational distributions over latent dynamics variables and latent reward variables (i.e. having updated the embedding parameters $\delta$, $\omega$), the learner updates, at S614, the general policy parameters $\theta$ to minimise a loss corresponding to an estimated KL divergence between the policy $\pi_\theta$ and a corresponding theoretically optimal (but intractable) policy $\pi_\theta^*$. The resulting loss is given by Equation (15):

$$L_\pi = \mathop{\mathbb{E}}_{i,j} \mathop{\mathbb{E}}_{s,z,g} \mathop{\mathbb{E}}_{a \sim \pi_\theta} \left[ \log \frac{\pi_\theta(a|s,z,g)}{p(a|s,z,g)} - \alpha_\pi Q_{\phi_{ij}}(s,a) \right],$$
(15)

where in some examples, the state-action value estimator is defined as a minimum of two or more candidate state-action value estimators as described above. Stochastic gradient descent is used to reduce the loss of Equation (15), which implicitly increases an objective function for estimating the expected state value for states encountered by an agent performing a task in the given task class.

The learner updates, at S616, the parameters $\overline{\psi_{ij}}$ of each of the task-specific target state value function estimators $V_{\overline{\psi_{ij}}}$ according to Equation (16):

$$\bar{\psi}_{ij} \leftarrow \beta\psi_{ij} + (1-\beta)\bar{\psi}_{ij},$$
(16)

where $\beta \in (0,1]$ is a predetermined constant. The updating of the target state value function estimators according to Equation (16) causes the target state value function estimator to move closer to the updated state value function estimator $V_{\overline{\psi_{ij}}}$.

The method of Figure 6 is performed iteratively, such that the updated parameters $\delta$, $\omega$, $\theta$ are transmitted to the agents performing the training tasks after each iteration, as described above with reference to S508 of Figure 5.

The examples described above result in a learner determining general policy parameters $\theta$ and embedding parameters $\delta$, $\omega$ with which an agent can perform tasks for which the dynamics index $i$ and the reward index $j$ are known, by performing the method of Figure 3. Provided that the learner is trained using tasks that span the task class sufficiently, the determined set of general policy parameters $\theta$ can then be used by an agent to perform any task in the class. In order for an agent to perform a new task, the agent must determine latent dynamics variables and latent reward variables corresponding to the new task. In one example, reinforcement learning is used to learn the conditional distributions $q_\delta(z|i')$ and $q_\omega(g|j')$ corresponding to the new task. It is noted that, because the conditional distributions over latent variables (each of which relates only to a single task), are chosen to be relatively simple compared with the policy (which relates to all tasks in the task class), the conditional distributions $q_\delta(z|i')$ and $q_\omega(g|j')$ for a new task can be learned quickly and using few computational resources compared with relearning an entire new policy. In effect, the task-independent information encoded in the policy parameters $\theta$ only needs to be learned once, then parameters of conditional distributions $q_\delta(z|i')$ and $q_\omega(g|j')$ can be learned for any new task (for example, new parameters $\delta_{i'}$, $\omega_{j'}$ using the parameterisation described above).

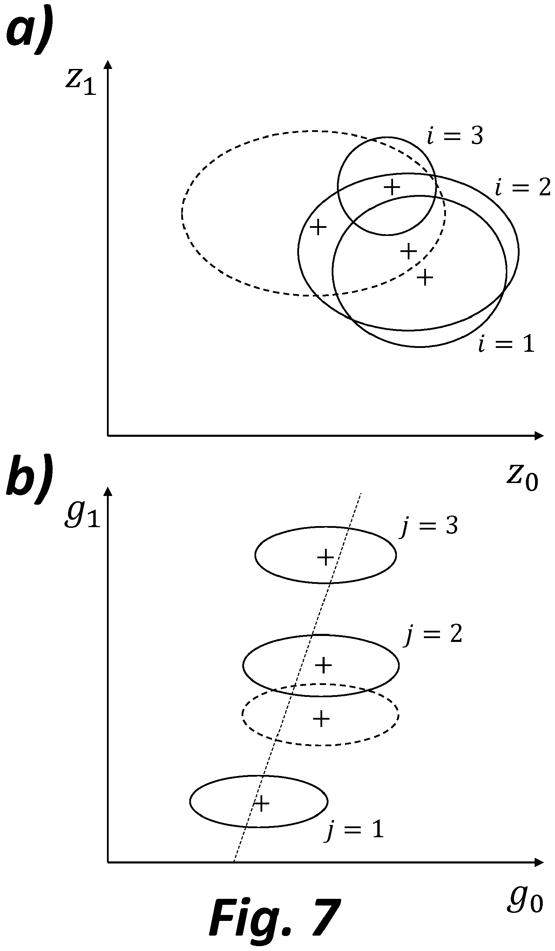

Figure 7a shows an example of conditional distributions $q_\delta(z|i)$ over two-dimensional dynamics variables $z = (z_0, z_1)$ for three dynamics indices $i = 1,2,3$, learned in accordance with the method of Figure 5. Each dynamics index corresponds to a respective set of dynamics parameters for a system in the cart-pole system class. Specifically, the dynamics indices {1,2,3} correspond to respective cart masses of {0.2,1.0,2.0} (measured in dimensionless units). In this example, the distributions are two-dimensional Gaussian distributions with diagonal covariance matrices. The cross symbols in Figure 7a show the respective mean values of the distributions, and the solid ellipses represent 1.5 times the respective standard deviations of the distributions. It is observed that the positions and shapes of the distributions are different for the different respective dynamics indices. In order to perform a task with one of the dynamics indices $i$ = 1,2,3, an agent samples a latent dynamics variable from the corresponding conditional distribution at each time step, as described above with reference to Figure 3.

Figure 7b shows an example of conditional distributions $q_\omega(g|j)$ over two-dimensional reward variables $g$ = $(g_0,g_1)$ for three reward indices $j$ = 1,2,3, learned in accordance with the method of Figure 5. Each reward index corresponds to a respective set of reward parameters for a given task. Specifically, the reward indices 1,2,3 correspond to goal regions of width 0.2, centred at $x_g$ = -1,0,1 respectively. In this example, the distributions are two-dimensional Gaussian distributions with diagonal covariance matrices. The cross symbols in Figure 7b show the respective mean values of the distributions, and the solid ellipses represent 1.5 times the respective standard deviations of the distributions. It is observed that the positions and shapes of the distributions are different for the different respective reward indices. In order to perform a task with one of the reward indices $j$ = 1,2,3, an agent samples a latent reward variable from the corresponding conditional distribution at each time step.

As mentioned above, in order for an agent to perform a task belonging to the same task class as the training tasks, but which is not one of the training tasks, reinforcement learning can be performed in which the general policy parameters $\theta$ are fixed, such that the learner is only required to determine the conditional distributions $q_\delta(z|i')$, $q_\omega(g|j')$. The dashed ellipse in Figure 7a and Figure 7b show examples of conditional distributions $q_\delta(z|i')$ and $q_\omega(g|j')$ over latent variables learned in this way, for a new task labelled with dynamics index $i'$ and reward index $j'$, corresponding to a cart mass of 1.75 and a goal region centred at $x_g$ = -0.5

In accordance with the present invention, the latent dynamics variables and the latent reward variables are separated such that an agent can deal with different goal contexts (corresponding to different reward parameters) within a system with fixed dynamics parameters, or may work towards a given goal even when the system parameters change. This disentangling of dynamics and rewards allows an agent to generalise to a far greater range of different tasks than is possible for existing MTRL methods, and in turn results in more efficient learning as it is only necessary for the training tasks to span the spaces of dynamics parameters and reward parameters independently, as opposed to having to span a higher-dimensional task space in which the dynamics parameters and the reward parameters are not separated.

In the example described above with reference to Figure 3, an agent selects actions in dependence on latent dynamics variables and latent reward variables sampled from distributions $q_\delta(z|i)$, $q_\omega(g|j)$. During the learning process of Figure 5, in which the general policy parameters $\theta$ and the embedding parameters $\delta$, $\omega$ are learned, sampling from these distributions results in exploration of the task space, which in turn results in a policy that generalises well between tasks within the task class. Once the generalised policy parameters have been learned, the agent can be configured to perform different tasks in the task class by controlling the selection of the latent variables $z$, $g$. For example, in order to configure the agent to perform one of the tasks labelled with dynamics and reward indices $(i,j)$, controlling the selecting of latent variables may include specifying parameters of conditional distributions $q_\delta(z|i)$, $q_\omega(g|j)$, from which the latent variables are sampled. Alternatively, controlling the selecting of latent variables may include enforcing at least one of the latent variables. For example, within a given system with fixed dynamics parameters, enforcing a specific value of the latent reward variable $g$ causes the agent to select actions to maximise rewards corresponding to a specific goal context.

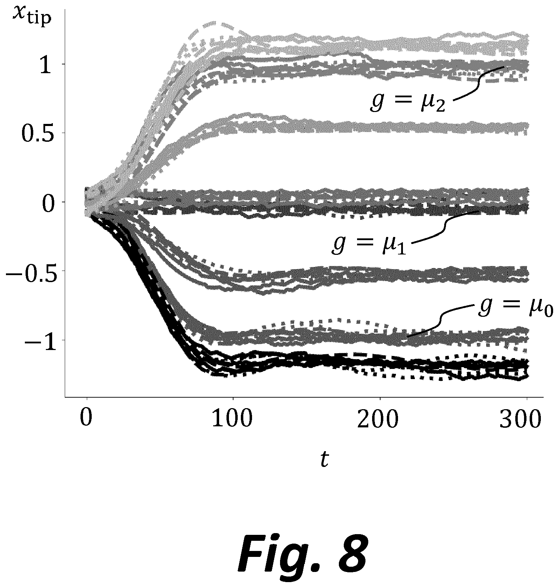

Figure 8 shows data from a simulated experiment in which an agent performs tasks in the cart-pole class, where the tasks are labelled with dynamics indices $i$ = 1,2,3, corresponding to different cart masses as described above with reference to Figure 7a. For each of the dynamics indices $i$ = 1,2,3, the agent performs actions by sampling latent dynamics variables $z$ from the corresponding conditional distribution $q_\delta(z|i)$ shown in Figure 7a. However, instead of the agent sampling latent reward variables $g$, for each trajectory one of eight different values of the latent reward variable $g$ is enforced. By enforcing different values of $g$, the agent is configured to select actions in accordance with respective different goal contexts. As shown in Figure 8, three of the enforced values of $g$ correspond to the mean values $\mu_1,\mu_2,\mu_3$ of the distributions $q_\omega(g|j)$ for $j$ = 1,2,3 respectively. For each of these enforced values, the tip of the pole after around 200 time steps balances approximately within the goal regions of width 0.2 centred at $x_g$ = -1,0,1 respectively, as would be expected if the agent sampled latent reward variables from the distributions $q_\omega(g|j)$ for $j$ = 1,2,3. Each of the other enforced values results in the tip of the pole balancing within a different goal region. More specifically, as the enforced latent reward variable is moved along the dashed line shown in Figure 7b, the resulting position of the tip of the pole moves continuously in $x$. For the experiment of Figure 8, each enforced value of $g$ was tested for each of the three systems with dynamics indices $i$ = 1,2,3, leading to slight variation of the resulting position of the pole tip (as shown by the dashed, dotted, and solid curves respectively) but for each enforced value of $g$ the variation is no greater that the width of the goal region. It is therefore observed that by enforcing a specific value of the reward parameter $g$, an agent is configured to select actions in accordance with a given goal context, independently of the dynamics parameters of the system. In other words, the information relating to the goal context and the information relating to the dynamics of the system have been decoupled or disentangled.

As explained above, by controlling the selecting of latent variables $g$ and $z$, an agent may be configured to perform different tasks in a given task class. As described above, for a new task with new dynamics and reward indices

($i',j'$), it is possible to efficiently determine optimal distributions $q_\delta(z|i')$, $q_\omega(g|j')$ using reinforcement learning. Alternatively, it is possible to use reinforcement learning to determine optimal enforced values $z$, $g$ for performing the new task. As will be explained in more detail hereafter, by dynamically controlling the selecting of the latent variables, an agent can be controlled in a dynamic system in which the goal context and/or dynamics parameters vary with time.

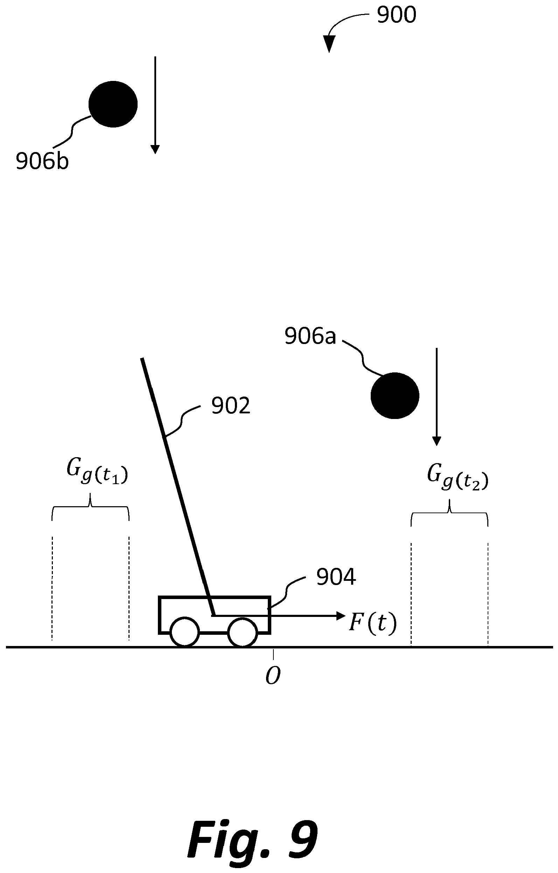

Figure 9 shows an augmented cart-pole task 900 including an augmented version of a cart-pole system as described in Figure 1. The augmented version of the system includes a uniform rigid pole 902 of length $l$ connected at one end by a hinge to a cart 904 of mass $m$. The horizontal position and speed of the cart 904 with respect to a fixed origin are given by $x$ and $\dot{x}$ respectively, and the angular position and velocity of the pole 902 with respect to the vertical are given by $\phi$ and $\dot{\phi}$ respectively. The augmented version of the system also includes two projectiles 906a and 906b that fall vertically downwards towards the ground. When one of the projectiles 906a or 906b reaches the ground, a new projectile falls from a random unknown position a fixed distance above the ground. Therefore, at any time there are two projectiles falling towards the ground. The positions of the two projectiles with respect to the origin $O$ are given by ($X_1$, $Y_1$) and ($X_2$, $Y_2$) respectively. A state of the augmented version of the system, also referred to as a meta-state of the system, can be represented by an eight-dimensional meta-state vector $\tilde{s} = (x, \phi, \dot{x}, \dot{\phi}, X_1, Y_1, X_2, Y_2)^\mathsf{T}$ (it is noted that the speeds of the falling projectiles can be determined from the respective vertical positions $Y_1$, $Y_2$, and it is therefore unnecessary to include these speeds in the meta-state vector). In this example, the meta-state vector $\tilde{s}$ may be written as a concatenation of a state vector $s$ of the original system and a vector $\hat{s} = (X_1, Y_1, X_2, Y_2)^\mathsf{T}$ containing the four additional state variables, such that $\tilde{s} = [s; \hat{s}]$. In other words, the meta-state of the system includes a state of the original system and the four additional state variables. In other examples, a meta-state may omit some or all of the state variables of a system. Furthermore, a meta-state of a system may be partially observable, in which case $\tilde{s}$ is used to refer to an observation of the meta-state of the system, as opposed to a full description of the meta-state of the system.

As was the case in the example of Figure 1, a computer-implemented agent applies a time-varying horizontal force $F(t)$ to the cart 904, and has the objective of balancing the pole 902 vertically. However, in the example of Figure 9, the agent must also ensure that the pole 902 and the cart 904 avoid the falling projectiles. A conventional way to approach this problem would be to learn a new policy for an agent to perform actions in dependence on observations of the meta-state of the system. This approach treats the task 900 of Figure 9 as entirely independent of the tasks 100 of Figure 1, such that any policy learned for performing the tasks 100 of Figure 1 would not be utilised in performing the task 900 of Figure 9.

Assuming a policy $\pi_\theta$ has been learned for the tasks 100 of Figure 1, a novel method involves using reinforcement learning to determine a meta-policy for a meta-agent to select a meta-action in dependence on an observation of a meta-state of the system. A meta-action controls a selecting of at least one of a latent dynamics variable $z$ and a latent reward variable $g$ for an agent equipped with a policy $\pi_\theta$ for performing the tasks 100 of Figure 1. The agent then selects an action on the basis of an observation of a state $s$ of the system, in dependence on the set of the general policy parameters $\theta$, the selected latent dynamics variable $z$, and the selected latent reward variable $g$.

In the example of Figure 9, the meta-agent controls the selecting of the latent reward variable $g$ by enforcing a value of $g$ with each meta-action. As demonstrated above with reference to Figure 8, enforcing different values of $g$ results in the pole 902 balancing in different goal regions. Figure 9 shows two different goal regions $G_{g(t_1)}$ and $G_{g(t_2)}$ corresponding to latent reward variables $g(t_1)$ and $g(t_2)$, enforced at time steps $t_1$ and $t_2$ respectively. By controlling the selecting of the latent reward variable $g$ in this way, the meta-agent is able to control the actions of the agent in order to avoid the falling projectiles 906.

In the example of Figures 9, the meta-agent performs meta-actions to control a selecting of latent reward variables. In other examples, a meta-agent may perform actions to control a selecting of latent dynamics variables, or to control a selecting of both latent dynamics variables and latent reward variables. For example, in a further augmented cart-pole task, a cart may be arranged to catch projectiles instead of avoiding projectiles. Each time a cart catches a projectile, the mass of the cart increases by the mass of the projectile. As the task progresses, different latent reward variables are required to control the goal location of the cart, and different latent dynamics variables are required to account for the increasing mass of the cart.

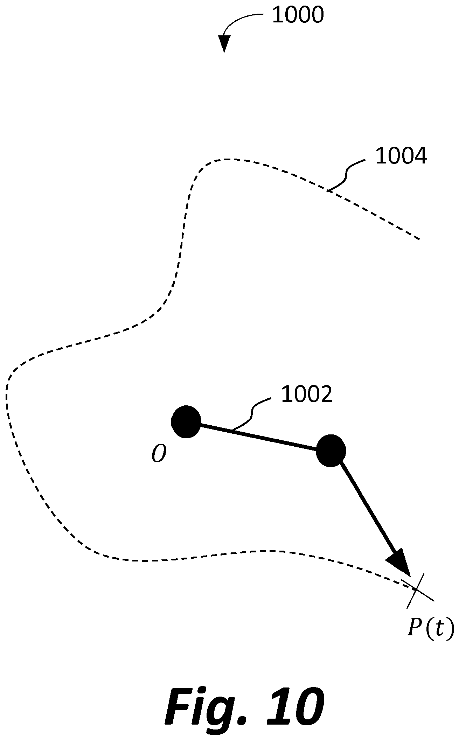

Figure 10 shows an example of an augmented reacher task 1000 involving a reacher arm 1002 with two segments of fixed length as described with reference to Figure 2. In this example, a time-dependent goal point $P(t)$ moves along a path 1004, and the objective of the augmented task is for the reacher arm to follow the moving goal point. A meta-state of the system can be represented at any given time by a six-dimensional state vector $\tilde{s} = (\phi, \psi, \dot{\phi}, \dot{\psi}, x_P, y_P)^\mathsf{T}$, where ($x_P, y_P$) are Cartesian co-ordinates of the goal point with respect to the point $O$. As before, a computer-implemented agent performs actions in accordance with a policy $\pi_\theta(a|s, z, g)$ to apply time-varying torques $T_1(t)$ and $T_2(t)$ at each of the hinges of the reacher arm 1002.

In the example of Figure 10, a meta-agent performs meta-actions in dependence on observation of meta-states of the system. In this example, a meta-action controls a selecting of the latent reward variable $g$ by enforcing a value of $g$ with each meta-action. Different values of $g$ results in the reacher arm 1002 pointing towards different points in space. By controlling the selecting of the latent reward variable $g$ in this way, the meta-agent is able to control the actions of the agent in order to follow the moving goal point $P(t)$.

In some examples, a meta-agent performs meta-actions at the same frequency as the agent performs actions. In other examples, a meta-agent may perform meta-actions at a lower frequency than the frequency at which an agent performs actions. For instance, the meta-agent may perform meta-actions after a predetermined number of time steps, such as 5, 10, 20, or 100 time steps, or any other number of time steps depending on the nature of the system and the task to be performed. In other examples, a meta-agent may perform meta-actions in response to certain changes in a meta-state of a system.

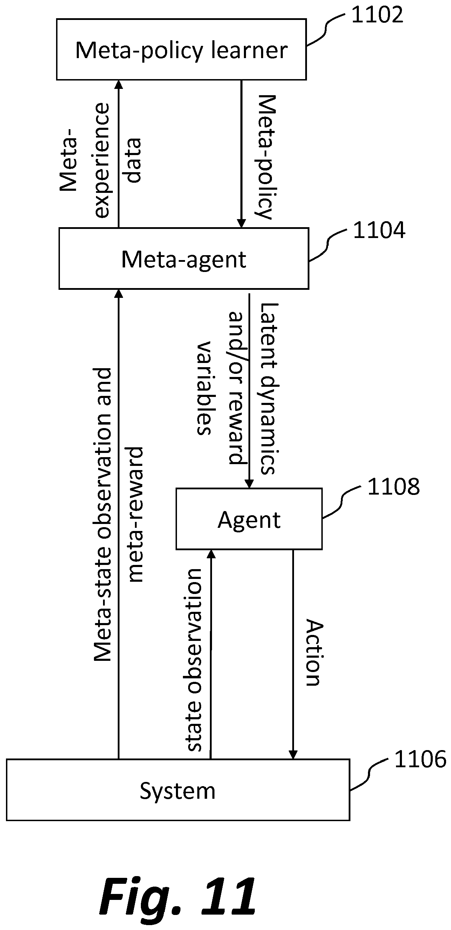

Figure 11 shows an example of a computer-implemented meta-policy learner 1102 in communication with a meta-agent 1104. The meta-agent 1104 makes observations of meta-states of a system 1106, and performs meta-actions $\tilde{a}$ according to a meta-policy $\tilde{\pi}_{\tilde{\theta}}(\tilde{a}|\tilde{s})$ in dependence on the meta-state observations $\tilde{s}$. The meta-policy is parameterised with meta-policy parameters $\tilde{\theta}$. The meta-agent 1104 thereby generates meta-experience data for meta-state transitions. The meta-agent 1104 sends the meta-experience data to the meta-policy learner 1102.

The meta-policy learner 1102 processes the meta-experience data received from the meta-agent 1104, and generates updated meta-policy parameters $\tilde{\theta}$. The meta-policy learner 1102 sends the updated meta-policy parameters $\tilde{\theta}$ to the meta-agent 1104, and the meta-agent 1104 continues to perform meta-actions $\tilde{a}$ using the updated meta-policy parameters $\tilde{\theta}$.

Each meta-action performed by the meta-agent controls a selecting of at least one of a latent dynamics variable $z$ or a latent reward variable $g$ for an agent 1108. In some examples, the controlling includes enforcing a specific value of the latent dynamics variable and/or the latent reward variable. In other examples, the controlling includes specifying parameters of a distribution or distributions from which the latent dynamics variable and/or the latent reward variable are to be sampled.

The agent 1108 is equipped with a policy $\pi_{\theta}$ as described above for selecting actions $a$ on the basis of a state observation $s$ and in dependence on a general set of policy parameters $\theta$, a selected latent dynamics variable $z$, and a selected latent reward variable $g$. The meta-actions performed by the meta-agent 1104 control the selecting of the latent dynamics variable $z$ and/or the latent reward variable $g$.

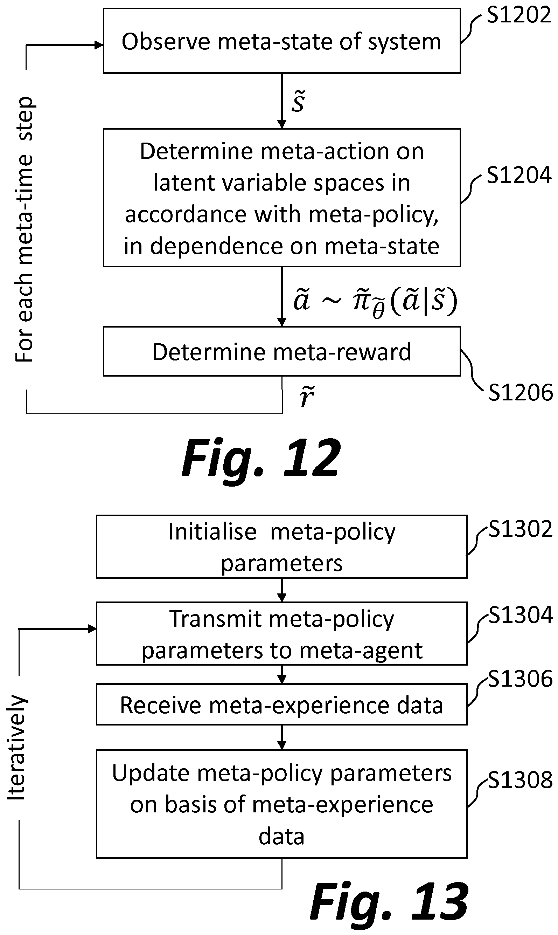

Figure 12 shows an example of a method performed by a meta-agent in accordance with the present invention. The meta-agent observes, at S1202, a meta-state of the system. As mentioned above, an observation $\tilde{s}$ may encode a full description or a partial description of the meta-state of the system.

The meta-agent determines, at S1204, a meta-action $\tilde{a}$ in accordance with the meta-policy $\tilde{\pi}_{\tilde{\theta}}(\tilde{a}|\tilde{s})$, in dependence on the observation $\tilde{s}$ of the meta-state of the system, in order to control a selecting of latent dynamics variables and/or latent reward variables. In the case of a stochastic meta-policy, determining the meta-action $\tilde{a}$ involves sampling a meta-action from a conditional distribution such that $\tilde{a} \sim \tilde{\pi}_{\tilde{\theta}}(\tilde{a}|\tilde{s})$.

Having performed the selected meta-action $\tilde{a}$, the meta-agent determines, at S1206, a meta-reward $\tilde{r}$. The meta-reward $\tilde{r}$ may depend on a meta-state of the system after the performance of the meta-action. In an example where the meta-agent performs meta-actions at a lower frequency than the agent performs actions, the meta-agent may make intermediate observations of the meta-state at a higher frequency, for example the frequency at which the agent performs actions, and the meta-reward may depend cumulatively on intermediate meta-rewards determined in accordance with the intermediate observations. In this way, the meta-agent may frequently observe the meta-state of the system, but only occasionally performs meta-actions. In some examples, the meta-reward may depend partially or completely on the rewards $r_j$ determined for the agent. In some examples, the meta-agent may be able to determine the meta-reward deterministically from the meta-state observation $\tilde{s}$ and the selected action $\tilde{a}$. In some examples, a meta-agent performs a meta-action in response to a specific event occurring, necessitating a change in behaviour of the agent.

The agent performs S1202-S1206 for each of a sequence of meta-time steps, which may correspond to a predetermined number of agent time steps as discussed above.

By performing the method of Figure 12, the meta-agent generates meta-experience data indicating a series of meta-state transitions. Each meta-state transition includes an initial meta-state observation, a meta-action, a final meta-state observation, and a meta-reward.

The hierarchical learning structure described above with reference to Figures 11-13, in which the agent 1108 is equipped with a policy for controlling low-level actions, and the meta-agent 1104 is equipped with a meta-policy for controlling a selecting of latent variables that alter the behaviour of the agent 1108, provides an efficient learning method in cases where the policy for controlling the low-level actions has already been learned. Furthermore, it is observed in some cases that the high-level policy learned using the hierarchical reinforcement learning (HRL) approach described above outperforms a policy learned directly for performing low-level actions in dependence on observations of the meta-state of the system.

Figure 13 shows an example of a method performed by a computer-implemented meta-policy learner in accordance with the present invention. The meta-policy learner is in communication with a meta-agent as shown for example in Figure 11. The meta-policy learner initialises, at S1302, a set of meta-policy parameters $\tilde{\theta}$. The meta-policy parameters $\tilde{\theta}$ may be initialised randomly, for example, or in accordance with some prior knowledge a meta-policy. In some examples, a meta-policy is implemented using a neural network, in which case the meta-policy parameters $\tilde{\theta}$ includes connection weights and/or bias values within the network.

The learner transmits, at S1304, the meta-policy parameters $\tilde{\theta}$ to the meta-agents, and the meta-agents performs meta-actions using the transmitted parameters, as described above with reference to Figure 12.

The meta-policy learner receives, at S1306, meta-experience data from the meta-agent, the meta-experience data indicating meta-state transitions as described above. The learner then uses the meta-experience data to update, at S1308, the meta-policy parameters $\tilde{\theta}$ on the basis of the experience data, in order to increase an objective function for estimating an expected meta-state value for meta-states encountered by the meta-agent. The meta-policy learner performs S1304-S1308 iteratively with the aim of determining a set of optimal meta-policy parameters $\tilde{\theta}^*$ that maximise the expected meta-state value for meta-states encountered by the meta-agent.

Depending on the specific implementation, a meta-policy learner may explicitly or implicitly increase an expected meta-state value. For example, a meta-policy learner may implement a REINFORCE-type learning method, which is an on-policy learning method in which an objective function is determined using entire trajectories of meta-experience data. Alternatively, a meta-policy learner may implement a soft actor-critic learning method, which is an off-policy learning method in which meta-state transitions are sampled from a replay memory and in which an expected meta-state value is increased implicitly by reducing a loss corresponding to a deviation of the meta-policy from an intractable optimal policy. Those skilled in the art will appreciate that other reinforcement learning methods may alternatively be implemented by the meta-policy learner.

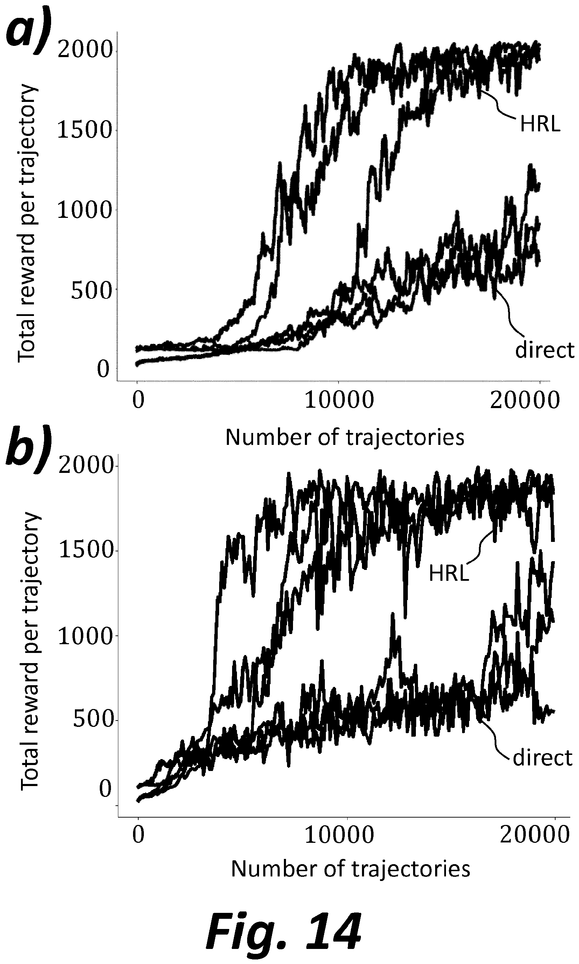

Figures 14a and 14b show results of experiments in which the HRL approach and the direct approach are compared for a simulated augmented cart-pole task as described above with reference to Figure 9. In the example of Figure 14a, only one projectile falls at a time. In the example of Figure 14b, two projectiles fall at a time, as described with reference to Figure 9. For each experiments, the mass of the cart was kept constant at $m = 1$ and in the system was initialised to three different random meta-states. The maximum number of time steps in an episode was set to $T - 1 = 2000$. For the HRL approach, a low level policy $\pi_\theta(a|s,z,g)$ was learned in advance using the method of Figure 5 with an objective function given by Equation (4), and during the experiments a high-level meta-policy $\tilde{\pi}_{\tilde{\theta}}(\tilde{a}|\tilde{s})$ for enforcing values of the latent reward variable was learned according to the method of Figure 13 using the REINFORCE learning method. For the direct approach, a low-level policy $\pi'(a'|\tilde{s})$ was learned during the experiment using the REINFORCE learning method. It is observed that, in both Figures 14a and 14b, the total reward per trajectory is consistently higher for the HRL approach than for the direct approach. After a sufficient number of trajectories, the total reward per trajectory for the HRL approach reaches close to the maximum possible total reward per trajectory (2000). Furthermore, the total reward per trajectory increases more rapidly for the HRL approach than for the direct approach, demonstrating a higher learning efficiency due to the utilisation of information learned in advance in the form of the low-level policy $\pi_\theta(a|s, z, g)$.

The above embodiments are to be understood as illustrative examples of the invention. Further embodiments of the invention are envisaged. For example, in some examples a meta-agent may perform meta-actions to control multiple agents, each being equipped with a policy to perform a given sub-task of an overall composite task. In other examples, multiple latent dynamics variables and/or multiple latent reward variables may be provided such that subsets of dynamics parameters and/or reward parameters may be varied independently.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A computer-implemented method of determining a policy for an agent performing a task belonging to a given task class, each task in the task class being associated with a respective system, wherein:

    the respective systems belong to a system class and are differentiated by respective sets of dynamics parameters;
    the tasks in the task class are further differentiated by respective sets of reward parameters for determining rewards dependent on actions performed by an agent; and
    for each task in the task class, the determined policy is arranged to select an action for the agent on the basis of an observation of a state of the respective system and in dependence on a set of general policy parameters, a latent dynamics variable, and a latent reward variable,
    the method comprising:

initialising the set of general policy parameters;

initialising, for each of a plurality of tasks in the class, a respective first variational distribution over latent dynamics variables and a respective second variational distribution over latent reward variables; and

iteratively:

receiving, for each of the plurality of tasks, experience data for one or more state transitions, each state transition comprising:

an initial observation of a state of the respective system;

an action performed by the agent in accordance with the policy on the basis of the initial observation and in dependence on the set of general policy parameters, a latent dynamics variable sampled from the respective first variational distribution, and a latent reward variable sampled from the respective second variational distribution;

an observation of a state of the respective system after the performance of the action by the agent; and

a reward determined in accordance with the respective reward parameters and dependent on the state of the respective system after the performance of the action; and

updating the general policy parameters, each respective first variational distribution, and each respective second variational distribution, on the basis of the received experience data, to increase an objective function for estimating an expected state value for states encountered by the agent while performing a task in the given task class.

2. The method of claim 1, comprising initialising, for each of the plurality of tasks:

parameters of a respective task-specific state value function estimator;

parameters of a respective task-specific target state value function estimator; and

parameters of a respective task-specific state-action value function estimator,

wherein the updating of the general policy parameters comprises, for each of the plurality of tasks:

storing the experience data generated for the task in a respective replay memory;

iteratively:

updating the parameters of the respective task-specific state-action value function estimator to reduce a loss determined using the respective task-specific target state value function estimator and the respective task-specific state-action value function estimator;

updating the parameters of the respective task-specific state value function estimator to reduce a loss determined using the respective task-specific state-action function estimator and the respective task-specific state value function estimator; and

updating the general policy parameters to reduce a loss determined using the respective task-specific state-action value function estimator; and

updating, for each of the plurality of tasks, the parameters of the respective task-specific target state value function estimator using the respective state value function estimator.

3. The method of claim 1, wherein:

the receiving of the experience data comprises receiving one or more trajectories, each comprising a plurality of state transitions; and

the objective function comprises, for each of the one or more trajectories, a respective Monte Carlo sample comprising discounted penalised cumulative rewards determined for the trajectory.

4. The method of claim 3, wherein the discounted penalised cumulative rewards for each Monte Carlo sample are normalised to have a predetermined mean and a predetermined variance.

5. The method of any preceding claim, wherein the expected state value comprises an entropy-regularising term.

6. The method of any preceding claim, wherein at least one of the first variational distribution and the second variational distribution is a multivariate Gaussian distribution.

7. The method of any preceding claim, wherein the expected state value comprises an expected discounted penalised cumulative reward.

8. The method of any preceding claim, wherein the respective set of reward parameters for each system determines one or more goal locations for an object in the system.

9. The method of any preceding claim, comprising generating control signals for one or more actuators in a physical system on the basis of the determined policy.

10. The method of any preceding claim, wherein:

   each of the plurality of tasks comprises a respective physical system;
   the observation of the state of each respective physical system is made using one or more sensors; and
   the performing of actions by an agent in each respective physical system comprises sending control signals to one or more actuators in the respective physical system.

11. The method of any preceding claim, comprising determining, using reinforcement learning, a meta-policy for a meta-agent to select a meta-action in dependence on an observation of a meta-state of a first system belonging to the system class,
   wherein the meta-action controls a selecting of at least one of a latent dynamics variable and a latent reward variable for the agent to select an action on the basis of an observation of a state of the first system and in dependence on the set of the general policy parameters, the selected latent dynamics variable, and the selected latent reward variable.

12. The method of claim 11, wherein the controlling of the selecting comprises enforcing at least one of a latent dynamics variable and a latent reward variable.

13. The method of claim 11 or 12, wherein the meta-state of the first system comprises a state of the first system and one or more additional state variables.

14. The method of any of claims 11 to 13, wherein the determining of the meta-policy comprises:

   initialising a set of meta-policy parameters; and
   iteratively:

      receiving meta-experience data for one or more meta-state transitions, each meta-state transition comprising:

         an initial observation of a meta-state of the first system;
         a meta-action performed by the meta-agent in accordance with the meta-policy on the basis of the initial observation of the meta-state and in dependence on the set of meta-policy parameters;
         an observation of a meta-state of the first system after the performance of the meta-action by the meta-agent; and
         a meta-reward dependent on the meta-state of the first system after the performance of the meta-action; and

      updating the meta-policy parameters to increase an objective function for estimating an expected meta-state value for meta-states encountered by the meta-agent.

15. A computer program product comprising machine-readable instructions which, when executed by a computer, cause the computer to perform the method of any of claims 1 to 14.

*Fig. 1*

**Fig. 2**

Determine task — S302

$(i, j)$

Sample latent dynamics variable — S304

$z \sim q_\delta(z|i)$

Sample latent reward variable — S306

$g \sim q_\omega(g|j)$

Observe state of system — S308

$s$

Determine action in accordance with policy, on basis of state observation, sampled latent dynamics variable, and sampled latent reward variable — S310

$a \sim \pi_\theta(a|s, g, z)$

Determine reward — S312

$r_j$

For each time step

# Fig. 3

Learner 402

$\theta, \delta_{i_1}, \omega_{j_1}$ experience data

$\theta, \delta_{i_2}, \omega_{j_2}$ experience data

$\theta, \delta_{i_n}, \omega_{j_n}$ experience data

Agent 404.1

Agent 404.2

Agent 404.$n$

$a$ $r, s$

$a$ $r, s$

$a$ $r, s$

System 406.1

System 406.2

System 406.$n$

$(i_1, j_1)$

$(i_2, j_2)$

$(i_n, j_n)$

## *Fig. 4*

Initialise general policy parameters — S502

$\theta$

Initialise variational distributions over latent dynamics variables — S504

$q_\delta(z|i), i = 1, \dots I$

Initialise variational distributions over latent reward variables — S506

$q_\omega(g|j), j = 1, \dots J$

Transmit parameters to agents — S508

Receive experience data — S510

Update variational distributions on basis of experience data — S512

Update general policy parameters on basis of experience data — S514

Iteratively

## Fig. 5

S508

↓

S510

↓

Store experience data in replay memory ⟋ S606

$D_{ij} \leftarrow D_{ij} \cup \{s_t, a_t, r_{t+1}, s_{t+1}\}$

Update state-action value function estimator ⟋ S608

$\phi_{ij}$

Update state value function estimator ⟋ S610

$\psi_{ij}$

Update variational distributions ⟋ S612

$\delta, \omega$

Update general policy parameters ⟋ S614

$\theta$

Update target value function estimators ⟋ S616

$\bar{\psi}_{ij}$

For each $i, j$

Iteratively

## *Fig. 6*

**Fig. 7**

Fig. 8

900

906b

906a

902

$G_{g(t_1)}$

$G_{g(t_2)}$

904

$F(t)$

$O$

**Fig. 9**

Fig. 10

**Fig. 11**

Observe meta-state of system — S1202

$\tilde{s}$

Determine meta-action on latent variable spaces in accordance with meta-policy, in dependence on meta-state — S1204

$\tilde{a} \sim \tilde{\pi}_{\tilde{\theta}}(\tilde{a}|\tilde{s})$

Determine meta-reward

$\tilde{r}$

— S1206

For each meta-time step

## Fig. 12

Initialise meta-policy parameters — S1302

Transmit meta-policy parameters to meta-agent — S1304

Receive meta-experience data — S1306

Update meta-policy parameters on basis of meta-experience data — S1308

Iteratively

## Fig. 13

**a)**

**b)**

**Fig. 14**

Europäisches
Patentamt

European
Patent Office

Office européen
des brevets

## EUROPEAN SEARCH REPORT

Application Number

EP 19 17 7449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br><br><br>A | KAROL HAUSMAN ET AL: "LEARNING AN EMBEDDING SPACE FOR TRANSFERABLE ROBOT SKILLS",<br>SIXTH INTERNATIONAL CONFERENCE ON LEARNING REPRESENTATIONS, ICLR 2018,<br>30 April 2018 (2018-04-30), XP055647208,<br>* abstract; figures 1,2, 3, 4 *<br>* Section 1, lines 1-6 *<br>* Section 1, lines 13-15 *<br>* Section 1, lines 22-24 *<br>* Section 1, lines 26-27 *<br>* Section 3, lines 3-7 *<br>* Section 4, lines 5-7 *<br>* Figure 1 caption, lines 1-5 *<br>* Section 4.1, lines 1-12 *<br>* Section 4.1, lines 17-23 *<br>* Section 4.1, lines 27-36 *<br>* Section 4.1, lines 41-46 *<br>* Section 5, lines 2-5 *<br>* Section 5, lines 8-15 *<br>* Section 5, lines 27-40 *<br>* Section 5, lines 45-46 *<br>* Equations 1, 2, 3, 4, 5 *<br>* Section 6, line 1 *<br>* Section 7.1, lines 3-7 *<br>* Section 7.1, lines 19-22 *<br>* Section 7.1, lines 27-42 *<br>* Section 7.2, lines 2-30 *<br>* Section C *<br>* Section D.1 *<br>* Section E.2, lines 2-6 *<br>----- | 1-10,15<br><br><br><br><br>11-14 | INV.<br>G06N20/00<br><br>ADD.<br>G06N7/00<br><br><br><br><br><br><br><br><br><br><br><br><br><br>TECHNICAL FIELDS SEARCHED (IPC)<br><br>G06N |

-/--

The present search report has been drawn up for all claims

| Place of search | Date of completion of the search | Examiner |
|---|---|---|
| The Hague | 28 November 2019 | Aoun, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

page 1 of 3

**EUROPEAN SEARCH REPORT**

Application Number

EP 19 17 7449

Europäisches
Patentamt
European
Patent Office
Office européen
des brevets

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ABHISHEK GUPTA ET AL: "Meta-Reinforcement Learning of Structured Exploration Strategies", PROCEEDINGS OF THE 32ND INTERNATIONAL CONFERENCE ON NEURAL INFORMATION PROCESSING SYSTEMS, NIPS'18, 5 December 2018 (2018-12-05), XP055647209, * abstract; figure 1 * * Section 1, lines 16-19 * * Section 1, lines 47-48 * * Section 1, lines 61-63 * * Section 2 * * Section 3.1, lines 2-7 * * Section 3.2 * * Section 3.3 * * Algorithm 1 * * Section 4.1, line 1 * * Section 5, lines 1-2 * | 1-15 | |
| A | AMY ZHANG ET AL: "Decoupling Dynamics and Reward for Transfer Learning", ARXIV.ORG, CORNELL UNIVERSITY LIBRARY, 201 OLIN LIBRARY CORNELL UNIVERSITY ITHACA, NY 14853, 27 April 2018 (2018-04-27), XP081233573, * the whole document * | 1-15 | |
| A | DEVIN COLINE ET AL: "Learning modular neural network policies for multi-task and multi-robot transfer", 2017 IEEE INTERNATIONAL CONFERENCE ON ROBOTICS AND AUTOMATION (ICRA), IEEE, 29 May 2017 (2017-05-29), pages 2169-2176, XP033126992, DOI: 10.1109/ICRA.2017.7989250 [retrieved on 2017-07-21] * the whole document * | 1-15 | |

TECHNICAL FIELDS
SEARCHED (IPC)

-/--

The present search report has been drawn up for all claims

| Place of search | Date of completion of the search | Examiner |
|---|---|---|
| The Hague | 28 November 2019 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 19 17 7449

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LUISA ZINTGRAF ET AL: "VARIATIONAL TASK EMBEDDINGS FOR FAST ADAPTATION IN DEEP REINFORCEMENT LEARNING", INTERNATIONAL CONFERENCE ON LEARNING REPRESENTATIONS (ICLR 2019) WORKSHOP ON STRUCTURE & PRIORS IN REINFORCEMENT LEARNING (SPIRL), 6 May 2019 (2019-05-06), XP055647356, * the whole document * | 1-15 | |

-----

TECHNICAL FIELDS
SEARCHED       (IPC)

The present search report has been drawn up for all claims

| Place of search | Date of completion of the search | Examiner |
|---|---|---|
| The Hague | 28 November 2019 | Aoun, Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)